(19) Europäisches Patentamt
European Patent Office
Office européen des brevets

(11) **EP 3 967 778 A1**

(12) **EUROPÄISCHE PATENTANMELDUNG**

(43) Veröffentlichungstag:
**16.03.2022   Patentblatt 2022/11**

(21) Anmeldenummer: **20215920.8**

(22) Anmeldetag: **21.12.2020**

(51) Internationale Patentklassifikation (IPC):
**C21B 13/00** (2006.01)    **C21B 13/14** (2006.01)
**F27B 15/00** (2006.01)    **F27B 15/10** (2006.01)
**F27D 7/02** (2006.01)

(52) Gemeinsame Patentklassifikation (CPC):
**C21B 13/146; C21B 13/0033; C21B 13/0073;
F27B 15/003; F27B 15/006; F27B 15/10;
F27D 7/02;** C21B 2300/02

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **15.09.2020   EP 20196258**

(71) Anmelder: **Primetals Technologies Austria GmbH
4031 Linz (AT)**

(72) Erfinder:
• **Hiebl, Bernhard
4073 Wilhering (AT)**
• **Rein, Norbert
1060 Wien (AT)**
• **Wolfinger, Thomas
4030 Linz (AT)**
• **Wurm, Johann
4283 Bad Zell (AT)**

(74) Vertreter: **Metals@Linz
Primetals Technologies Austria GmbH
Intellectual Property Upstream IP UP
Turmstraße 44
4031 Linz (AT)**

(54) **VERFAHREN UND VORRICHTUNG ZUR BEREITSTELLUNG EINES EINSATZMATERIALS FÜR DIREKTREDUKTION**

(57)    Die Erfindung betrifft ein Verfahren zur Bereitstellung eines Einsatzmaterials für Direktreduktion, wobei oxidisches Eisenträgerpartikel-Rohmaterial auf eine Temperatur von zumindest 400°C erwärmt und gegebenenfalls oxidiert wird. Sie betrifft auch eine Vorrichtung zur Durchführung des Verfahrens und die Verwendung des Einsatzmaterials für Direktreduktion.

Fig. 2

Printed by Jouve, 75001 PARIS (FR)

**Beschreibung**

Gebiet der Technik

Die Anmeldung betrifft ein Verfahren zur Bereitstellung eines Einsatzmaterials für Direktreduktion, eine Vorrichtung dazu, und die Verwendung des Einsatzmaterials für Direktreduktion.

Stand der Technik

Verschiedenste Verfahren zur Direktreduktion von oxidischen Eisenträgerpartikeln, beispielsweise Eisenerz, mittels einer von Reduktionsgas durchströmten Wirbelschicht - auch Wirbelbett genannt - sind bekannt. Kommerziell angewendet wurden bisher beispielsweise FIOR, FINMET, FINEX, CIRCORED.

Im Rahmen dieser Anmeldung umfasst der Begriff Eisenerz sowohl Erze, die nach Förderung aus einer Mine direkt dem Reduktionsprozess zugeführt werden, als auch Erze, die erst nach auf die Förderung folgenden Aufbereitungsschritten oder anderen Vorbehandlungen dem Reduktionsprozess zugeführt werden. Jedenfalls ist in ihnen oxidiertes Eisen enthalten.

In den zur Eisenerzreduktion verwendeten Wirbelschichtverfahren werden Feststoffteilchen - also die oxidischen Eisenträgerpartikel, beispielsweise Schüttgut aus Eisenerz - von Reduktionsgas entgegen der Schwerkraft durchströmt. Dadurch werden die Feststoffteilchen in einen fluidisierten Zustand, d.h. in Schwebe versetzt, und die durchströmte Menge nimmt praktisch die Fließeigenschaft eines Fluids an, was auch fluidisieren genannt wird. Fluidisierung wird auch zum Transport von Feststoffen genutzt, beispielsweise bei Luftförderrinnen mit Bewegung von Feststoff und Gas im Kreuzstrom.
Die Ausprägung einer Wirbelschicht kann je nach Stärke der Fluidisierung in verschiedene Stufen eingeteilt werden, beispielsweise minimum/smooth/bubbling/turbulent. Ausgehend von einem Festbett beziehungsweise fixed bed genannten Zustand, in dem das Reduktionsgas das Schüttgut durchströmt, ohne es zu fluidisieren. Mit ansteigender Gasgeschwindigkeit beginnt Fluidisierung mit dem Zustand minimum fluidization und geht dann mit weiter ansteigender Gasgeschwindigkeit in den Zustand smooth fluidization über. Die in einer Wirbelschicht vorliegende Stufe der Fluidisierung hängt von Gasgeschwindigkeit, Gasdichte und -viskosität sowie von der Partikelmasse und -dichte, der Form, dem Partikelvolumen und der Korngrößenverteilung der eingesetzten Feststoffpartikel ab. Gleichzusetzen mit dem Begriff Wirbelschicht ist der Begriff Fließbett, die beiden Begriffe werden in der vorliegenden Anmeldung gleichbedeutend verwendet. Am Wirbelpunkt erfolgt Übergang von einem Festbett zu einem Fließbett.

Grundsätzlich werden in einer Wirbelschicht aufgrund der großen zur Verfügung stehenden Austauschfläche zwischen Feststoff und Gas vergleichsweise große Stoff - und Wärmeübertragungsraten erzielt. Entsprechend kommt es bei den Reduktionsreaktionen zu hohen spezifischen Umsatzraten.

Der technisch und ökonomisch erreichbare Metallisierungsgrad der Reduktionsprodukte hängt von vielen Faktoren ab.

Zur Reduktion einer Stoffmenge Eisenoxid zu metallischem Eisen muss zumindest die für die Reduktionsreaktion stöchiometrisch benötigte Menge an Reduktionsgas bereitgestellt werden. Das tatsächlich durch den Feststoff zu transportierende Reduktionsgasvolumen wird durch die thermodynamische Gleichgewichtslage zwischen den verschiedenen Oxidationsstufen des Erzes und dem Reduktionsgas bestimmt. Diese Gleichgewichtslage kann durch die Temperatur beeinflusst werden.

Mit einer Betriebsweise unter erhöhtem Druck kann der Massestrom des Reduktionsgases erhöht werden, nachteilig sind dabei jedoch höhere Anforderungen an das Design und die Sicherheitstechnik des Reduktionsaggregates.

Bei hohen Temperaturen ergibt sich auch der Nachteil der Neigung der Feststoffteilchen zur Agglomeration - auch Sticking genannt -, was den Betrieb der Wirbelschicht ungünstig beeinflusst, beispielsweise durch Defluidisierung.

Mit einer Betriebsweise mit erhöhter Gasgeschwindigkeit kann der Massestrom des Reduktionsgases erhöht werden.

Im Rahmen der vorliegenden Anmeldung ist mit dem Begriff Gasgeschwindigkeit die Leerrohrgeschwindigkeit gemeint.

Die bei einem bestimmten Schüttgut aus Feststoffteilchen maximale praktisch anwendbare Gasgeschwindigkeit - und damit die maximal pro Flächeneinheit pro Zeiteinheit durch die Wirbelschicht transportierbare Gasmenge - ergibt sich aus jener Gasgeschwindigkeit, über der ein für den Prozess nicht mehr vernachlässigbarer Anteil der Feststoffteilchen aus der Wirbelschicht ausgetragen wird.

Der Zustand, wenn die Gasgeschwindigkeit der Absetzgeschwindigkeit der Feststoffteilchen entspricht, wird Austragspunkt genannt. Die Gasgeschwindigkeit des Reduktionsgases gleicht im Austragspunkt der Absetzgeschwindigkeit der Feststoffteilchen und wird als Schwebegeschwindigkeit bezeichnet. Bei weiterer Steigerung der Gasgeschwindigkeit werden die Feststoffteilchen vom Gas mitgerissen und entgegen der Schwerkraft aus der Wirbelschicht ausgetragen. Aus der Wirbelschicht ausgetragene Feststoffteilchen nehmen nicht mehr an den Reaktionen in der Wirbelschicht teil, wodurch sich die Effizienz eines wirbelschichtbasierten Reduktionsverfahrens vermindert.

Je geringer die Korngröße von Feststoffteilchen ist, desto geringer ist die Schwebegeschwindigkeit. Aus geringen Gasgeschwindigkeiten ergibt sich eine Notwendigkeit von großen Reaktorflächen zur Gewährleistung eines bestimmten Durchsatzes für geringe Korngrößen. Vergrößerung von Reaktorflächen hat jedoch Nachteile wie hohen Bauaufwand, hohe Betriebskosten, höhere Fehleranfälligkeit. Großen Reaktorflächen wirkt man bei gegenwärtig angewendeten Technologien durch beispielsweise bezüglich Sicherheitstechnik und Betrieb aufwändige Maßnahmen entgegen - beispielsweise signifikante Druckerhöhung, Betrieb mit einer turbulenten Wirbelschicht einschließlich Rückführung von ausgetragenem Feststoff.

Bei Verarbeitung von oxidischen Eisenträgerpartikeln mit großen Anteilen kleiner Korngrößen ergeben sich daher die Probleme geringer einsetzbarer Gasgeschwindigkeiten und damit verbunden der Notwendigkeit großer Reaktorflächen.

Als Maßnahme zur Erhöhung der Austragsgeschwindigkeit werden kleine Feststoffteilchen auch oft agglomeriert, bevor sie einer Reduktion in der Wirbelschicht zugeführt werden.

Es wird beim Anmelder daran gearbeitet, Verfahren und Vorrichtungen bereitzustellen, die bei vergleichsweise geringen sicherheitstechnischen Anforderungen und geringem Bau- und Betriebs- Aufwand eine Nutzung von oxidischen Eisenträgerpartikeln mit zumindest 90 Massen% mit einer Korngröße kleiner/gleich 200 Mikrometer für Direktreduktion in einem Fließbett ohne vorherigem Agglomerationsschritt zulassen.

Ein Vorschlag zur Lösung dieser Aufgaben ist ein Verfahren zur Direktreduktion von oxidischen Eisenträgerpartikeln zu einem Reduktionsprodukt in einem im Kreuzstrom von einem 30 - 100 Mol% Wasserstoff $H_2$ enthaltenden Reduktionsgas durchströmten Fließbett,

bei dem

die in das Fließbett eingegebenen oxidischen Eisenträgerpartikel zu zumindest 90 Massen% eine Korngröße kleiner/gleich 200 Mikrometer haben,

Dabei ist es vorteilhaft, dass die Leerrohrgeschwindigkeit U des durch das Fließbett strömenden Reduktionsgases zwischen 0,05 m/s und 1 m/s so eingestellt wird, dass sie für die Korngröße d gleich $d_{30}$ der in das Fließbett eingegebenen oxidischen Eisenträgerpartikel oberhalb der theoretischen Schwebegeschwindigkeit $U_t$ liegt und kleiner/gleich $U_{max}$ ist.

Der Wert $d_{30}$ für die Korngröße - in dieser Anmeldung auch Partikelgröße genannt - der eingegebenen oxidischen Eisenträgerpartikel gibt an, dass 30 Massen% der oxidischen Eisenträgerpartikel eine Partikelgröße kleiner/gleich $d_{30}$ haben - 70 Massen% also größer sind.

Der theoretisch vorhergesagte Wert $U_t$ für eine Korngröße d ergibt sich aus:

$$U_t = \sqrt{\left(\frac{4}{3} * \frac{(\rho p - \rho g)}{\rho g} * \frac{d*g}{Cw}\right)}$$

mit

$$C_w = \frac{24}{Re} + \frac{4}{\sqrt{Re}} + 0,4 \quad \text{und mit} \quad Re = \frac{\rho g * U_t * d}{\mu}$$

$U_{max}$ ergibt sich aus dem tatsächlich gefundenen Zusammenhang zwischen Partikelgröße und Schwebegeschwindigkeit für eine Partikelgröße d gleich $d_{30}$:

$$U_{max} = (40000*d)\char`^2,78$$

$U_t$ \qquad theoretische Schwebegeschwindigkeit [m/s]

$U_{max}$ \qquad maximale Leerrohrgeschwindigkeit für d=$d_{30}$ [m/s]

$\rho p$ \qquad Partikeldichte [kg/m$^3$]

$\rho g$ \qquad Dichte des Reduktionsgases [kg/m$^3$]; für den Betriebszustand

d \qquad Korngröße [m]

g        Erdbeschleunigung [m/s$^2$]

$\mu$       dynamische Viskosität [kg/(m*s)]

$c_w$       Widerstandsbeiwert

Re       Reynoldszahl

Die Theorie der herrschenden Lehre würde gemäß dem bereits genannten Zusammenhang für $U_t$ erwarten lassen, dass bei Einstellung der Leerrohrgeschwindigkeit U oberhalb der theoretischen, für die Partikelgröße $d_{30}$ der in das Fließbett eingegebenen oxidischen Eisenträgerpartikel geltenden, Schwebegeschwindigkeit $U_t$ mehr als 30 Massen% ausgetragen werden.

Überraschenderweise hat sich für in das Fließbett eingegebene oxidische Eisenträgerpartikel mit einer Korngröße von zumindest 90 Massen% kleiner/gleich 200 Mikrometer herausgestellt, dass bei der vorteilhaften Verfahrensführung weniger ausgetragen wird, obwohl die $U_t$ für die Partikelgröße d gleich $d_{30}$ überschritten wird, solange die Leerrohrgeschwindigkeit U kleiner/gleich $U_{max}$ für d gleich $d_{30}$ ist. Entsprechend kann bei einem gegebenen maximal akzeptablen Austrag mit höheren Gasgeschwindigkeiten als aus der Theorie erwartet gearbeitet werden. Bevorzugt wird die Leerrohrgeschwindigkeit U so eingestellt, dass maximal 30 Massen% ausgetragen werden - also $U_{max}$ für d=$d_{30}$ -, besonders bevorzugt so, dass maximal 25 Massen% ausgetragen werden, ganz besonders bevorzugt so, dass maximal 20 Massen% ausgetragen werden, und äußerst bevorzugt so, dass maximal 15 Massen% ausgetragen werden.

Das Reduktionsgas wird bei diesem vorgeschlagenen Verfahren mit einer Geschwindigkeit von über 0,05 m/s, bevorzugt über 0,1 m/s, durch die Wirbelschicht geführt. Mit derart gewählten Parametern zeigen die oxidischen Eisenträgerpartikel in dem gebildeten Fließbett, das vom Reduktionsgas im Kreuzstrom durchströmt wird, ein anderes Verhalten, als nach herrschender Lehre - gemäß dem bereits genannten Zusammenhang für $U_t$ - vorausgesagt wird. Unterhalb einer Geschwindigkeit von 0,05 m/s ist die Aufrechterhaltung des Fließbetts schwierig zu regeln und das Verhältnis von Aufwand der Verfahrensführung zum erzielbaren Durchsatz gering. Wie weit die tatsächlich gewählte Geschwindigkeit über 0,05 m/s, bevorzugt über 0,1 m/s, liegt, hängt vom für den Betreiber zulässigen Ausmaß des Austrags aus dem Fließbett ab. Einerseits ist eine höhere Geschwindigkeit erwünscht, weil infolgedessen die für einen gewünschten Durchsatz notwendige Reaktorfläche kleiner sein kann. Andererseits nimmt der Austrag mit steigender Geschwindigkeit zu, und vermindert der Austrag von Partikeln aus der Wirbelschicht den realisierbaren Durchsatz. Daher beträgt die Obergrenze der Leerrohrgeschwindigkeit 1 m/s.

Besonders bevorzugt ist die Durchführung des voranstehend beschriebenen Verfahrens in einem Geschwindigkeitsbereich von 0,05 m/s bis 0,5 m/s, weil Durchsatz und das Ausmaß von Austrag dann in einem günstigen Verhältnis stehen.

Bei dem voranstehend beschriebenen Verfahren wird ein Fließbett in einem Zustand der Fluidisierung im Bereich Minimum verwendet; es wird keine zirkulierende Wirbelschicht verwendet.

Die ausgetragene Menge bezieht sich auf den Zeitraum von Eingabe oxidischer Eisenträgerpartikel in das Fließbett bis zur Entnahme des aus ihnen gebildeten Reaktionsproduktes - also auf die Partikelverweilzeit im Fließbett.

Bezüglich allgemeiner Sachverhalte zur Reduktion in einer Wirbelschicht beziehungsweise einem Fließbett wird auf den einleitenden Text zum Stand der Technik verwiesen. "Einer" ist als unbestimmter Artikel zu verstehen im Ausdruck "in einem Fließbett".

Die oxidischen Eisenträgerpartikel können Eisenerz sein oder auch anderes entsprechend feinkörniges, Eisenoxide enthaltendes Material, beispielsweise Gichtstaub, Sinterstaub, Pelletierstaub oder andere Rücklaufstoffe eines Eisen- beziehungsweise Stahlwerks; es können auch Mischungen daraus sein. Unter dem Begriff Eisenerz sind im Rahmen der vorliegenden Anmeldung zu verstehen sowohl Erze, die direkt nach der Förderung aus einer Mine dem Reduktionsprozess zugeführt werden, als auch Erze, die erst nach auf die Förderung folgenden Aufbereitungsschritten - beispielsweise Flotation - oder anderen Vorbehandlungen dem Reduktionsprozess zugeführt werden. Jedenfalls ist in ihnen oxidiertes Eisen enthalten.

Korngrößenbereich und Korngrößenverteilung ergeben sich durch den Vorgang der großindustriellen Produktion des Einsatzmaterials. Sie werden per Siebanalyse gemessen . Ein Material von oxidischen Eisenträgerpartikeln, das zu zumindest 90 Massen% eine Korngröße kleiner/gleich 200 Mikrometer hat - und in der Regel mit mehr als 50 Massen% kleiner 50 Mikrometer $\mu$m vorliegt -, ist beispielsweise Pelletfeed. Zur Anwendung kommt ein Analyseverfahren nach ISO13320 im Status März 2019.

Das Reduktionsgas kann aus Wasserstoff $H_2$ bestehen oder eine Mischung von Wasserstoff mit einem oder mehreren weiteren Gasen sein. Beispielsweise kann technisch reiner Wasserstoff verwendet werden. Reduktionsmittel ist also zumindest Wasserstoff $H_2$. Die weiteren Gase können selber auch reduzierend auf oxidischen Eisenträgerpartikel wirken, also zusätzlich zu Wasserstoff $H_2$ weitere Reduktionsmittel bereitstellen. Ein weiteres Gas kann beispielsweise Kohlenmonoxid CO sein. Der Wasserstoff kann beispielsweise aus Elektrolyse, bevorzugt mittels grüner Energie, stammen, oder aus Reformierung von Erdgas.

Die Reduktionskinetik von Wasserstoff $H_2$ mit Eisenoxiden ist grundsätzlich, und besonders bei tieferen Temperaturen, günstiger als bei anderen Gasen, beispielsweise im Vergleich zu Kohlenmonoxid CO. Daher sollte das Reduktionsgas bei dem voranstehend beschriebenen Verfahren zumindest 30 Mol% Wasserstoff $H_2$ enthalten, um bei dem infolge der Sticking-Gefahr bevorzugten Temperaturbereich des voranstehend beschriebenen Verfahrens noch ökonomisch brauchbare Reduktionskinetik zu gewährleisten. Im Vergleich zu einem Reduktionsgas mit geringerem Wasserstoff-Gehalt ist infolgedessen zur Erzielung eines bestimmten Metallisierungsgrades weniger frisches Reduktionsgas einzusetzen. Im Vergleich zu einem Reduktionsgas mit geringerem Wasserstoff-Gehalt ist infolgedessen gegebenenfalls weniger aus dem Fließbett austretendes, verbrauchte Reduktionsgas nach Aufbereitung zwecks Nutzung des in ihm enthaltenen unverbrauchten Reduktionsmittels zu rezirkulieren.

Das Reduktionsgas wird von unten nach oben, entgegen der Schwerkraft, durch das Fließbett geführt. Das voranstehend beschriebene Verfahren im Kreuzstrom durchgeführt. Die Bewegung der Partikel - oxidische Eisenträgerpartikel, Zwischenprodukt, Reduktionsprodukt - im Fließbett erfolgt so, dass ein Kreuzstrom des Reduktionsgases und der Partikel resultiert. Bei dem Verfahren werden die oxidischen Eisenträgerpartikel in das Fließbett eingegeben und es wird das Reduktionsprodukt aus dem Fließbett entnommen. Die Bewegung vom Eingabeort zum Entnahmeort im Kreuzstrom zum entgegen der Schwerkraft strömenden Reduktionsgas erfolgt im Wesentlichen in der Horizontalen.

Bei einem Fließbett im Kreuzstrom - ausgeführt beispielsweise in einer Fließbettrinne - erfolgt die Direktreduktion über die - vorzugsweise annähernd horizontal ausgerichtete - Länge des Fließbetts von einem Eingabeort zu einem Entnahmeort. Somit ändert sich über die Länge des Fließbetts die Qualität - beispielsweise die Mengenverhältnisse der Eisenoxidarten Magnetit, Hämatit oder Wüstit, oder die Porosität der Partikel - des enthaltenen Eisenoxides. Eine Rückvermischung, wie sie bei einer Wirbelschicht sogar bis zu Homogenität an allen Orten vorkommen kann, ist unerwünscht, weil dadurch beispielsweise wenig reduziertes Material vom Eingabeort zum Entnahmeort gelangen könnte beziehungsweise die Partikelverweilzeit ungleichmäßig werden würde.

Das Reduktionsprodukt - beispielsweise Eisenschwamm DRI mit einem Metallisierungsgrad über 90 % - weist einen höheren Metallisierungsgrad auf als die oxidischen Eisenträgerpartikel. Der Metallisierungsgrad ist definiert als das Verhältnis der Massenanteile von metallisch vorliegendem Eisen zum gesamten vorhandenen Eisen im Reduktionsprodukt:

$$\text{Metallisierungsgrad} = \text{Massenanteil (Fe metallisch)}/\text{Massenanteil (Fe gesamt)}$$

Je nach Verfahrensführung kann der Metallisierungsgrad des Reduktionsprodukts verschieden sein. Je nach Einsatzzweck des Reduktionsproduktes kann ein höherer oder niedrigerer Metallisierungsgrad gewünscht sein - beispielsweise kann er bei Nutzung des voranstehend beschriebenen Verfahrens zur Vorreduktion für anderweitige Endreduktion auch unter dem von Eisenschwamm DRI liegen, beispielsweise in der Größenordnung von 60 %.

Wie lange Partikel bis zur Umsetzung zum gewünschten Reduktionsprodukt in dem Fließbett verbleiben müssen - genannt Partikelverweilzeit -, hängt von der Kinetik der abzulaufenden Reduktionsreaktion ab. Diese ist wiederum abhängig von einer Vielzahl von Faktoren wie der Zusammensetzung des Reduktionsgases, der Geschwindigkeit des Reduktionsgases, der Art der oxidischen Eisenträgerpartikel - beispielsweise je nachdem, ob Magnetit, Hämatit oder Wüstit zu reduzieren ist - , der Porosität der zu reduzierenden Partikel.

Die Partikelverweilzeit entspricht der Zeit, die Partikel für das Strömen vom Eingabeort zum Entnahmeort brauchen - eingegeben als oxidische Eisenträgerpartikel, entnommen als Reduktionsprodukt-Partikel. Wie lange die Partikelverweilzeit ist, hängt beispielsweise vom Abstand des Eingabeortes vom Entnahmeort und von der Betthöhe des Fließbetts ab. Bei der voranstehend beschriebenen Verfahrensführung im Kreuzstrom, die beispielsweise in einem im Wesentlichen horizontalen Fließbett unter - bevorzugt kontinuierlicher - Zugabe von oxidischen Eisenträgerpartikel und - bevorzugt kontinuierlicher - Entnahme des Reduktionsproduktes erfolgt, lässt sich die Partikelverweilzeit über die eingestellte Betthöhe einfach regulieren, beispielsweise über Wehre. Die Partikelverweilzeit lässt sich dabei auch über die Wahl des Abstandes zwischen Eingabeort und Entnahmeort regulieren.

Unter im Wesentlichen horizontal wird eine Abweichung von der Horizontalen von bis zu 10° mit umfasst; bevorzugt sind bis zu 5° Abweichung mit umfasst, besonders bevorzugt sind bis zu 2° Abweichung mit umfasst. Bei zu hoher Abweichung von der Horizontalen wird die Betthöhe im Fließbett über die Längserstreckung des Fließbetts vom Eingabeort zum Entnahmeort inhomogen, was sich negativ auf die Regelbarkeit der Partikelverweilzeit auswirkt.

Für die Dauer der Gasverweilzeit verbleibt das Reduktionsgas im Fließbett. Ist die Gasverweilzeit zu kurz für die Einstellung annähernd eines Gleichgewichtes der Reduktionsreaktion, wird relativ viel unverbrauchtes Reduktionsmittel das Fließbett verlassen. Der Anteil von unverbrauchtem Reduktionsmittel in dem das Fließbett verlassenden Gas - verbrauchtes Reduktionsgas genannt - kann über die Betthöhe beeinflusst werden. Verfahrensführung im Kreuzstrom macht es einfach, die Anforderungen von Partikelverweilzeit und Gasverweilzeit abzustimmen.

Mit dem voranstehend beschriebenen Verfahren ist es möglich, die entsprechend vorliegenden Eisenträger-Partikel ohne vorherige Agglomeration ökonomisch sinnvoll zu reduzieren. Dabei kann der Bau- und Betriebsaufwand für Anlagen zur Durchführung des Verfahrens vergleichsweise geringer gehalten werden, da zumindest die Temperatur, gegebenenfalls auch der Druck relativ gering ist. Daraus ergibt sich auch, dass sicherheitstechnisch weniger Aufwand getrieben werden muss.

Druckerhöhung wirkt sich über gesteigerten Massestrom des Reduktionsgases als mögliche Durchsatzerhöhung bei gleichbleibender Reaktorfläche beziehungsweise mögliche Verminderung von Reaktorfläche bei gleichbleibendem Durchsatz aus. Allerdings kann geplanter Überdruck höhere Anforderungen an das Design und die Sicherheitstechnik des Reduktionsaggregates stellen.

Das voranstehend beschriebene Verfahren wird bevorzugt bei einer Temperatur durchgeführt, die zwischen den Grenzen 773 K und 1173 K liegt, wobei diese Grenzen mit eingeschlossen sind. Damit wird die Gefahr von Sticking der Partikel in dem Fließbett in unerwünschtem Ausmaß, was bei höheren Temperaturen Probleme bereiten würde, reduziert. Unterhalb 773 K verläuft die Reduktion aus thermodynamischen und kinetischen Gründen nicht in einem für wirtschaftliche Verfahrensführung befriedigenden Ausmaß. Beispielsweise werden die oxidischen Eisenträgerpartikel vorgewärmt und mit einer Temperatur von bis zu 1323 K, bevorzugt bis zu 1273 K, in das Fließbett eingebracht, und das Reduktionsgas mit einer Temperatur bis zu 1023 K in das Fließbett eingeleitet. Die Reduktion mit Wasserstoff $H_2$ verläuft endotherm, so dass das Reduktionsprodukt mit einer tieferen Temperatur, beispielsweise von etwa 853 K, erhalten wird.

Statt oder zusätzlich zu Vorwärmung außerhalb des Fließbetts könnte auch das Verhältnis von exotherm reagierenden reduzierenden Komponenten - wie beispielsweise Kohlenmonoxid CO - zu endotherm reagierenden reduzierenden Komponenten - wie beispielsweise Wasserstoff $H_2$ - im Reduktionsgas so eingestellt werden, dass im Fließbett in situ Wärme in gewünschtem Ausmaß zugeführt wird.

Vorzugsweise wird das voranstehend beschriebene Verfahren unter einem geringen Überdruck gegenüber der Umgebung durchgeführt. Bei einem geringen Überdruck ist einerseits noch kein apparatebaulicher sicherheitstechnischer Zusatzaufwand im Vergleich zu überdruckloser Verfahrensführung notwendig, und andererseits werden Gefahren durch Eindringen von Umgebungsluft in die Reaktoren vermindert. Der Überdruck beträgt vorzugsweise bis zu 200000 Pascal, wobei dieser Wert mit umfasst ist.

Nach einer vorteilhaften Variante ist $d_{30}$ kleiner/gleich 110 Mikrometer für die in das Fließbett eingegebenen oxidischen Eisenträgerpartikel. In diesem Bereich lässt sich das Fließbett besonders gut betreiben, da der Austrag von feinen oxidischen Eisenträgerpartikeln nicht ungünstig hoch ist und die Fluidisierung des Fließbetts nicht durch große Partikelgrößen erschwert wird.

Nach einer vorteilhaften Variante wird das voranstehend beschriebene Verfahren so durchgeführt, dass die in das Fließbett eingegebenen oxidischen Eisenträgerpartikel zu zumindest 50 Massen% zwischen 15 Mikrometer und 100 Mikrometer liegen - wobei die Grenzen mit umfasst sind.

In diesem Bereich lässt sich das Fließbett besonders gut betreiben, da der Austrag von feinen oxidischen Eisenträgerpartikeln nicht ungünstig hoch ist und die Fluidisierung des Fließbetts nicht durch große Partikelgrößen erschwert wird.

Nach einer weiteren vorteilhaften Variante wird das voranstehend beschriebene Verfahren so durchgeführt, dass die in das Fließbett eingegebenen oxidischen Eisenträgerpartikel zu zumindest 50 Massen% eine Korngröße größer/gleich 15 Mikrometer haben. In diesem Bereich lässt sich das Fließbett besonders gut betreiben, da der Austrag von feinen oxidischen Eisenträgerpartikeln nicht ungünstig hoch ist.

Je feiner die oxidischen Eisenträgerpartikel sind, desto größer wird der aufgrund eines erhöhten Staubaustrags notwendige Aufwand für Entstaubung von verbrauchtem Reduktionsgas. Weiterhin kann das Fließbett selber weniger stabil und schwerer kontrollierbar werden mit abnehmender Größe der Eisenträger-Partikel. Vorzugsweise liegen die oxidischen Eisenträgerpartikel mit Anteilen von maximal 30 Massen% kleiner als 10 Mikrometer $\mu$m vor. Zumindest bis zu dieser Feinheit der oxidischen Eisenträgerpartikel kann das Verfahren gut beherrscht werden.

Das Fließbett kann auch verschiedene Zonen mit verschiedenen Betthöhen aufweisen. In der Regel erfolgt bei oxidischen Eisenträgerpartikeln aufgrund des Vorliegens von Eisen in verschiedenen Oxidationsstufen Reduktion in mehreren Stufen über Zwischenprodukte - beispielsweise Magnetit über Hämatit zu Wüstit. Aus morphologischen, thermodynamischen und kinetischen Gründen unterscheiden sich Optimalwerte für Partikelverweilzeit und Gasverweilzeit für die verschiedenen Stufen beziehungsweise Zwischenprodukte. Verschiedene Zwischenprodukte liegen bei voranstehend beschriebener Verfahrensführung im Kreuzstrom in verschiedenen Zonen des Fließbettes verschieden konzentriert vor. Mit Zonen des Fließbettes sind dabei Bereiche entlang der Erstreckung vom Eingabeort zum Entnahmeort gemeint. Daher ist es vorteilhaft, wenn Einstellung verschiedener Betthöhen in verschiedenen Zonen des Fließbetts möglich ist. So können für verschiedene Zonen Partikelverweilzeit und Gasverweilzeit durch Einstellung der Betthöhe passend adaptiert werden. Das ist beispielsweise durch Wehre möglich, oder durch verschieden dimensionierte Zonen des Reaktorraums, von dem das Fließbett begrenzt wird.

Vorzugsweise beträgt die Betthöhe im Fließbett 0,1-0,5 m, besonders bevorzugt 0,3-0,4 m. Damit können bei voranstehend beschriebener Verfahrensführung bei der Reduktion von oxidischen Eisenträgerpartikeln ausreichende Gasverweilzeiten und Partikelverweilzeiten erreicht werden. Der Anteil von unverbrauchtem Reduktionsmittel in dem verbrauchten Reduktionsgas liegt in einem ökonomisch vertretbaren Rahmen, wenn das Fließbett eine Betthöhe zwischen 0,1-0,5 Meter aufweist, wobei 0,1 und 0,5 von dem Bereich mit umfasst sind.

Vorzugsweise beträgt die Gasverweilzeit des Reduktionsgases in dem Fließbett 0,1 Sekunde bis 10 Sekunden, besonders bevorzugt 1 s - 2 s. Wenn das Reduktionsgas in dem Fließbett zwischen 1 und 2 Sekunden - wobei 1 und 2 von dem jeweiligen Bereich mit umfasst sind, - verweilt, kann Sauerstoffabbau bereits nahe am Gleichgewicht erfolgen, und der Anteil von unverbrauchtem Reduktionsmittel in dem verbrauchten Reduktionsgas liegt dann in einem ökonomisch besonders gut vertretbaren Rahmen.

Ziel ist es nämlich, beim Passieren des Fließbetts möglichst viel Reduktionsmittel zu verbrauchen. Je weniger Reduktionsmittel verbraucht wird, desto mehr Reduktionsgas muss für eine gegebene Menge oxidischen Eisenträgerpartikeln in das Fließbett eingeführt werden beziehungsweise umso größer ist der Aufwand zur Rezirkulierung von unverbrauchtem Reduktionsmittel.

Bei voranstehend beschriebener Verfahrensführung der Betthöhe und/oder Gasverweilzeit zeigt sich auch überraschenderweise, dass eine Steigerung des Stoffumsatzes infolge erhöhten Drucks des Reduktionsgases kaum signifikant erfolgt und zu einem Anstieg des Anteils von unverbrauchtem Reduktionsmittel in dem verbrauchten Reduktionsgas führen kann.

Mit Atmosphärendruck beziehungsweise geringem Überdruck kann entsprechend resourcenschonend und sicherheitstechnisch vorteilhaft gearbeitet werden, ohne auf nennenswerte Steigerungen des Stoffumsatzes zu verzichten.

Vorzugsweise wird aus dem Fließbett austretendes, verbrauchtes Reduktionsgas nach Aufbereitung wieder als Komponente des Reduktionsgases in das Fließbett rezirkuliert. Das macht das Verfahren wirtschaftlicher. Die Reduktionsgaskomponente Wasserstoff macht Rezirkulierung bei der Reduktion von oxidischen Eisenträgerpartikeln sehr einfach, da diesbezüglich neben einer gegebenenfalls notwendigen Staubabtrennung lediglich eine Abtrennung des Reaktionsproduktes Wasser $H_2O$ stattfinden muss.

Nach einer vorteilhaften Ausführungsvariante wird dem Fließbett überall das gleiche Reduktionsgas zugeführt; gleich bezüglich Zusammensetzung, oder bezüglich Temperatur, oder bezüglich Druck, oder bezüglich zweier oder aller drei dieser Parameter. Das macht die Kontrolle des Verfahrens einfach und reduziert anlagentechnischen Aufwand.

Nach einer anderen vorteilhaften Ausführungsvariante wird in verschiedene Zonen des Fließbetts verschiedenes Reduktionsgas - beispielsweise Mischungen mehrerer Komponenten in verschiedenen Verhältnissen, also Reduktionsgas jeweils verschiedener Zusammensetzung; es kann sich auch um Reduktionsgas mit jeweils verschiedener Temperatur handeln, oder um Reduktionsgas mit jeweils verschiedenem Druck; oder um Reduktionsgase, die bezüglich zweier oder aller drei dieser Parameter verschieden sind - zugeführt. Das ist dann möglich, -, wenn das Fließbett verschiedene Zonen aufweist. Auf diese Weise kann man mit verschieden reaktionsfähigen Reduktionsgasen darauf reagieren, dass in verschiedenen Zonen verschieden reaktionsfähige Zwischenprodukte vorhanden sind.

Eine vorgeschlagene Vorrichtung zur Durchführung des voranstehend beschriebenen Verfahrens kann wie anschließend beschrieben ausgeführt sein. Sie umfasst einen Fließbettreaktor geeignet zur Führung von Partikeln und Reduktionsgas im Kreuzstrom in einem Reaktorraum mit Verteilerboden zur Ausbildung des Fließbetts. Der Reaktorraum hat zumindest eine Eingabeöffnung für oxidische Eisenträgerpartikel und zumindest eine Entnahmeöffnung für Reaktionsprodukt aus dem Reaktorraum. Die Vorrichtung umfasst auch zumindest eine Reduktionsgaszufuhrleitung zur Zufuhr von Reduktionsgas zum Verteilerboden, und zumindest eine Reduktionsgasabfuhrleitung zur Abfuhr von verbrauchtem Reduktionsgas aus dem Reaktorraum.

"Einem" ist als unbestimmter Artikel zu verstehen im Ausdruck "in einem Reaktorraum".

Der Reaktorraum kann in mehrere Zonen unterteilt sein entlang seiner Erstreckung von der Eingabeöffnung zur Entnahmeöffnung. Das kann beispielsweise durch, vorzugsweise verstellbare, Wehre erfolgen, die eine Quervermischung der Partikel aus - von der Eingabeöffnung zur Entnahmeöffnung gesehen - benachbarten Zonen unterbinden sowie gezielte Einstellung von Zonen mit verschiedenen Betthöhen erlauben. Das kann auch dadurch realisiert sein, dass der Fließbettreaktor mehrere Teilreaktoren umfasst, deren jeweilige Teil-Reaktorräume jeweils einzelne Zonen bilden. In Summe ergeben die Teilreaktoren den Fließbettreaktor, und die Teil-Reaktorräume den Reaktorraum des Fließbettreaktors. Die Teil-Reaktorräume können auch in mehrere Zonen unterteilt sein. Nach einer Ausführungsvariante können die einzelnen Zonen verschiedene Dimensionen in der Horizontale und/oder in der Vertikalen aufweisen - so dass das Fließbett jeweils verschieden breit ist beziehungsweise verschiedene maximale Betthöhen möglich sind; auf diese Weise sind bei konstantem Durchsatz verschiedene Betthöhen in verschiedenen Zonen realisierbar.

Nach einer Variante umfasst der Fließbettreaktor - beziehungsweise gegebenenfalls die Teilreaktoren - mehreren gleichartige Module. Das erlaubt kostengünstige Errichtung mit vorgefertigten Modulen, sowie einfache Anpassung an unterschiedliche Kapazitätsanforderungen.

Vorzugsweise umfasst der Fließbettreaktor mehrere Teilreaktoren. Diese können sequenziell und/oder parallel angeordnet sein. Sie sind bevorzugt über Übergabevorrichtungen miteinander verbunden. Im Betrieb werden Partikel beispielsweise von einem Teilreaktor in den in Richtung von der Eingabeöffnung zur Entnahmeöffnung entlang des Fließbettreaktors gesehen benachbarten Teilreaktor übergeben mittels der Übergabevorrichtungen. Die Übergabevorrichtungen sind geeignet, Partikel zu übergeben, ohne dass es zu Lufteintritt in die Teilreaktoren beziehungsweise Gasaustritt kommt.

Vorzugsweise sind mehrere Teilreaktoren übereinander gestapelt. Das vermindert den Flächenbedarf des Layouts der Vorrichtung zur Durchführung des voranstehend beschriebenen Verfahrens. Partikel strömen der Schwerkraft folgend von einer oben gelegenen Eingabeöffnung zu einer unten gelegenen Entnahmeöffnung.

Der Verteilerboden des Fließbettreaktors ist im Wesentlichen horizontal. Davon wird eine Abweichung von der Horizontalen von bis zu 10° mit umfasst; bevorzugt sind bis zu 5° Abweichung mit umfasst, besonders bevorzugt sind bis zu 2° Abweichung mit umfasst. Bei zu hoher Abweichung von der Horizontalen wird die Betthöhe im Fließbett über die Längserstreckung des Fließbetts vom Eingabeort zum Entnahmeort inhomogen, was sich negativ auf die Regelbarkeit der Partikelverweilzeit auswirkt.

Vorzugsweise ist der Verteilerboden des Fließbettreaktors beziehungsweise zumindest eines Teilreaktors von der Eingabeöffnung zur Entnahmeöffnung hin abwärts geneigt. Das vereinfacht den Fluss der Partikel im Kreuzstrom, wie beispielsweise von Luftförderrinnen bekannt.

Nach einer Variante weist jede Zone eine eigene Reduktionsgaszufuhrleitung auf. Nach einer Variante mündet in jeden Teilreaktor eine eigene Reduktionsgaszufuhrleitung. Vorzugsweise entspringen diese Reduktionsgaszufuhrleitungen alle aus einer Zentralleitung. Die Zentralleitung liefert Reduktionsgas in die Reduktionsgaszufuhrleitungen. Das über die Zentralleitung gelieferte Reduktionsgas kann beispielsweise frisches Reduktionsgas- also Reduktionsgas, das die Wirbelschicht noch nie durchströmt hat - sein, oder eine Mischung aus frischem Reduktionsgas und einem rezirkuliertem Reduktionsgas - aus Aufbereitung von verbrauchtem Reduktionsgas gewonnenes Reduktionsgas.

Nach einer Variante weist jede Zone eine eigene Reduktionsgasabfuhrleitung auf. Nach einer Variante entspringt aus jedem Teilreaktor eine eigene Reduktionsgasabfuhrleitung. Vorzugsweise münden alle Reduktionsgasabfuhrleitungen in eine Abfuhrsammelleitung, welche in eine Gasaufbereitungsanlage mündet. In der Gasaufbereitungsanlage wird das verbrauchte Reduktionsgas aufbereitet, beispielsweise entstaubt und getrocknet. Die Vereinigung aller aus dem Reaktorraum beziehungsweise seinen Zonen und/oder Teilreaktoren austretenden verbrauchten Reduktionsgas zwecks zentraler Aufbereitung erleichtert ihre Rezirkulierung in den Reduktionsprozess.

Eingesetzt werden kann eine Signalverarbeitungseinrichtung mit einem maschinenlesbaren Programmcode, der Regelbefehle zur Durchführung des voranstehend beschriebenen Verfahrens aufweist. Es handelt sich also sich um eine Signalverarbeitungseinrichtung zur Durchführung des voranstehend beschriebenen Verfahrens.

Ein einsetzbarer maschinenlesbarer Programmcode für eine Signalverarbeitungseinrichtung weist Regelbefehle auf, welche die Signalverarbeitungseinrichtung zur Durchführung eines voranstehend beschriebenen Verfahrens veranlassen. Eingesetzt werden kann ein Computerprogrammprodukt umfassend Befehle für eine Signalverarbeitungseinrichtung, die bei der Ausführung des Programms für die Signalverarbeitungsvorrichtung diese veranlassen, das voranstehend beschriebene Verfahren durchzuführen.

Eingesetzt werden kann ein Speichermedium mit einem darauf gespeicherten maschinenlesbaren Programmcode wie oben beschrieben. Eingesetzt werden kann ein Speichermedium mit einem darauf gespeicherten Computerprogramm zur Durchführung des voranstehend beschriebenen Verfahrens.

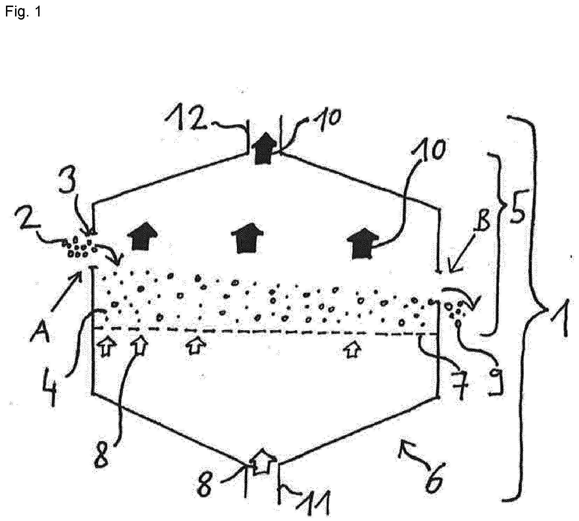

Figur 1 zeigt schematisch die Durchführung einer Ausführungsform des voranstehend beschriebenen Verfahrens zur Direktreduktion von oxidischen Eisenträgerpartikeln in einem im Kreuzstrom durchströmten Fließbett. Das Verfahren wird in der Vorrichtung 1 durchgeführt. Oxidische Eisenträgerpartikel 2, die zu zumindest 90 Massen% eine Korngröße kleiner/gleich 200 $\mu$m haben, werden am Eingabeort A durch die Eingabeöffnung 3 kontinuierlich in ein Fließbett 4 im Reaktorraum 5 eines Fließbettreaktors 6 eingegeben, was durch einen Pfeil dargestellt ist. Nach einer Variante können bis zu 30 Massen% der oxidischen Eisenträgerpartikel kleiner 15 $\mu$m sein. Das Fließbett 4 wird im Reaktorraum 5 dadurch ausgebildet, dass Partikel entgegen der Schwerkraft von einem, von unten durch einen Verteilerboden 7 einströmenden Reduktionsgas 8 - dargestellt durch nicht ausgefüllte Blockpfeile - angehoben werden. Im dargestellten Beispiel wird überall das gleiche Reduktionsgas 8 zugeführt. Der Verteilerboden 7 ist durch Lücken im unteren Umriss des Reaktorraums 5 angedeutet; zu besseren Übersichtlichkeit wurde nicht jeder Lücke ein eigener Blockpfeil zugeordnet, und es wurden nicht alle Blockpfeile mit dem Bezugzeichen 8 versehen. Eisenoxide in den oxidischen Eisenträgerpartikeln 2 werden durch das Reduktionsgas 8 zum Reduktionsprodukt 9 reduziert. Durch die Reduktion der Eisenoxide in den oxidischen Eisenträgerpartikeln verbrauchtes Reduktionsgas 10 tritt - dargestellt durch ausgefüllte Blockpfeile - oben aus dem Fließbett 4 aus. Das Reduktionsgas 8 besteht beispielsweise aus technisch reinem Wasserstoff $H_2$; entsprechend wird das verbrauchte Reduktionsgas 10 beispielsweise Wasser $H_2O$ und Wasserstoff enthalten, da nicht der gesamte von unten einströmende Wasserstoff umgesetzt werden wird. Vom verbrauchten Reduktionsgas 10 aus dem Fließbett heraus nach oben mitgerissene Partikel sind nicht extra dargestellt. An einem Entnahmeort B werden kontinuierlich die Partikel des Reduktionsproduktes 9 aus dem Fließbett 4 im Reaktorraum 5 entnommen, was mit einem Pfeil dargestellt ist. Das Reduktionsgas 8 wird mit einer Geschwindigkeit von über 0,05 m/s von unten nach oben im Kreuzstrom durch das Fließbett 4 geführt. Die Temperatur der eingegebenen oxidischen Eisenträgerpartikel 2 beträgt beispielsweise 1173 K, und die Temperatur des einströmenden Reduktionsgases 8 überall 1023 K. Das Reduktionsprodukt 9 hat beispielsweise eine Temperatur von 853 K.

In dem in Figur 1 schematisch dargestellten Fließbettreaktor 6 herrscht vorzugsweise ein geringer Überdruck von 200000 Pa gegenüber der Umgebung.

Das dargestellte Verfahren kann beispielsweise so durchgeführt werden, dass die Betthöhe in der Wirbelschicht 4 0,1-0,5 m beträgt, und/oder die Gasverweilzeit 0,1 - 10 s, bevorzugt 1 - 2 s, beträgt.

Das Reduktionsgas 8 wird über die Reduktionsgaszufuhrleitung 11 dem Verteilerboden 7 zugeführt. Die Reduktionsgasabfuhrleitung 12 dient zur Abfuhr von verbrauchtem Reduktionsgas 10 aus dem Reaktorraum 5.

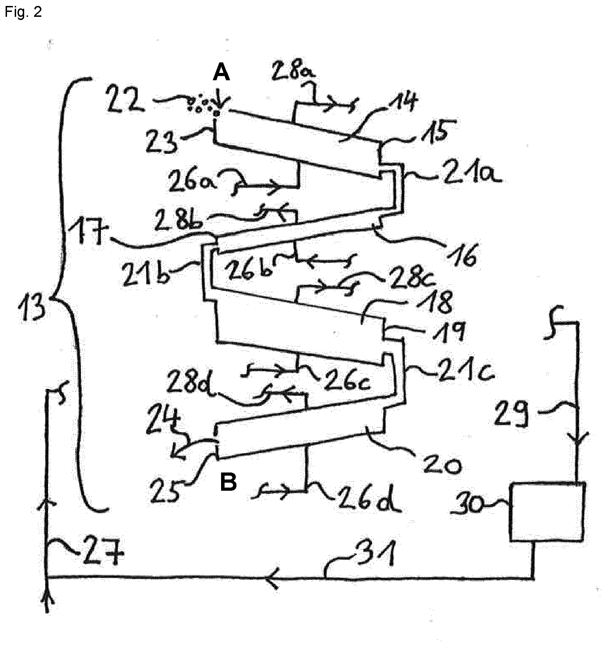

Figur 2 zeigt schematisch eine Ausführungsform, in der ein Fließbettreaktor 13 mehrere Teilreaktoren 14,16,18,20 umfasst. Die Teilreaktoren sind sequentiell miteinander verbunden; Teilreaktor 14 ist an seinem Ende 15 mit dem Teilreaktor 16 verbunden, der selber an seinem Ende 17 mit dem Teilreaktor 18 verbunden ist. Teilreaktor 18 ist mit seinem Ende 19 mit dem Teilreaktor 20 verbunden. Die Verbindungen erfolgen über Übergabevorrichtungen 21a, 21b, 21c. Die Eingabeöffnung A für oxidische Eisenträgerpartikel 22 ist am Anfang 23 des Teilreaktors 14 vorhanden, die Entnahmeöffnung B für Reaktionsprodukt 24 ist am Ende 25 des Teilreaktors 20 vorhanden. Die Zwischenprodukte der Reduktion der oxidische Eisenträgerpartikel 22 zum Reduktionsprodukt 24 werden durch die Übergabevorrichtungen 21a, 21b, 21c jeweils von einem, in Richtung von der Eingabeöffnung A entlang der Wirbelschicht zur Entnahmeöffnung B hin gesehen vorderen, Teilreaktor in den darauffolgenden Teilreaktor übergeben. Während das feste Material in der - nicht extra dargestellten - Wirbelschicht - also oxidische Eisenträgerpartikel, Partikel von Zwischenprodukten, und Partikel von Reduktionsprodukt - durch die aufeinander folgenden, also sequentiell miteinander verbundenen, Teilreaktoren 14,16,18,20 von der Eingabeöffnung A zur Entnahmeöffnung B des Fließbettreaktors 13 strömt, wird es im Kreuzstrom vom Reduktionsgas - nicht extra dargestellt - durchströmt. In der Darstellung der Figur 2 sind die Teilreaktoren 14,16,18,20 vertikal übereinander gestapelt. Sie sind mit leicht abschüssigen Böden ausgeführt. In die verschiedene Teilreaktoren 14,16,18,20 münden jeweils eigene Reduktionsgaszufuhrleitungen 26a,26b,26c,26d, die alle aus einer Zentralleitung 27 entspringen - zur besseren Übersichtlichkeit sind ihre Verbindungen mit Zentralleitungen 27 nicht extra dargestellt. Von den verschiedenen Teilreaktoren 14,16,18,20 gehen jeweils eigene Reduktionsgasabfuhrleitungen 28a,28b,28c,28d aus, die alle in eine Abfuhrsammelleitung 29 münden- zur besseren Übersichtlichkeit sind ihre Verbindungen mit Abfuhrsammelleitung 29 nicht extra dargestellt. Die Abfuhrsammelleitung 29 mündet in eine Gasaufbereitungsanlage 30, in der verbrauchtes Reduktionsgas beispielsweise entstaubt und getrocknet wird. Über eine Rezirkulierungsleitung 31 wird das Produkt der Aufbereitung - im Fall des Beispiels aus Figur 1 entstaubter und getrockneter Wasserstoff - der Zentralleitung 27 zugeführt, und somit zusammen mit anderweitig besorgtem frischem Wasserstoff $H_2$ als Komponente des Reduktionsgases in das Verfahren rezirkuliert.

Das Fließbett im Fließbettreaktor 13 weist mehrere Zonen auf - in jedem Teilreaktor 14,16,18,20 befindet sich eine Zone. Durch verschiedene Dimensionierung der Teilreaktoren 14,16,18,20, schematisch dargestellt in Figur 2 durch verschieden Höhen, haben die verschiedenen Zonen des Fließbetts bei kontinuierlicher Verfahrensführung jeweils verschiedene Betthöhen.

Nach einer Variante des voranstehend beschriebenen Verfahrens könnten die verschiedenen Zonen mit verschiedenem Reduktionsgas versorgt werden; diese Variante ist nicht extra dargestellt.

Auf eine detaillierte Darstellung der Zufuhr beziehungsweise Herstellung von frischem Wasserstoff $H_2$ aus anderen Quellen wurde zur besseren Übersichtlichkeit verzichtet.

Insgesamt beeinflussen Temperatur, Druck und Zusammensetzung des Reduktionsgases die Reaktionskinetik, woraus sich Anforderungen an Gasverweilzeit und Partikelverweilzeit sowie Betthöhe ergeben. Die Geschwindigkeit des Reduktionsgases beeinflusst das Ausmaß von Austrag aus dem Fließbett und die Menge des zirkulierenden Reduktionsgasvolumens. Reaktionskinetik und Reduktionsgasgeschwindigkeit wiederum wirken sich auf die benötigte spezifische Reaktionsfläche aus.

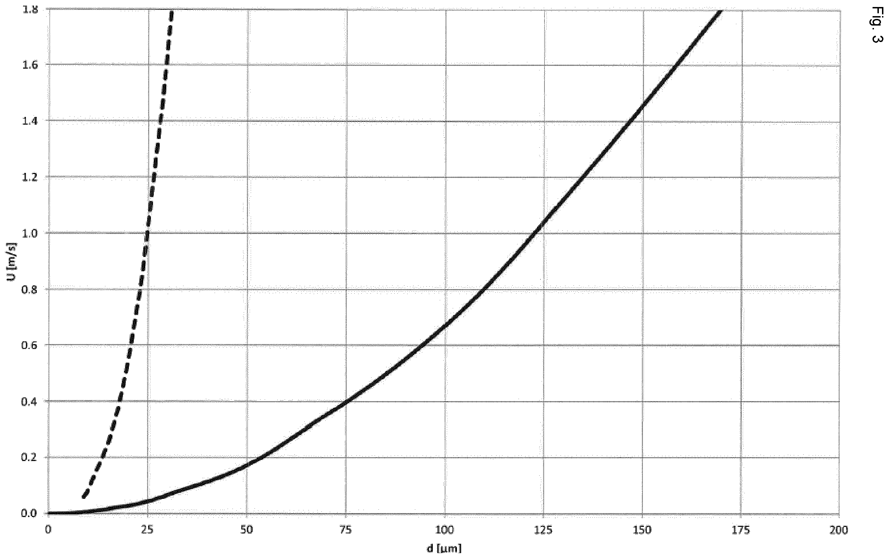

Figur 3 zeigt mit durchgezogener Linie den nach herrschender Lehre erwarteten Wert für die theoretische Schwebegeschwindigkeit $U_t$ für verschiedene Korngrößen d kugelförmiger DRI/Eisenerz-Partikel bei 1023 K mit Wasserstoff $H_2$ als Reduktionsgas und einem Überdruck von 200000 Pa:

$$U_t = \sqrt{\left(\frac{4}{3} * \frac{(\rho p - \rho g)}{\rho g} * \frac{d*g}{Cw}\right)}$$

mit

$$C_w = \frac{24}{Re} + \frac{4}{\sqrt{Re}} + 0,4 \quad \text{und mit} \quad Re = \frac{\rho g * U_t * d}{\mu}$$

Ebenso gezeigt ist strichliert der

$U_{max} = (40000*d)^{\wedge}2,78$ folgende Zusammenhang zwischen Korngröße d und Schwebegeschwindigkeit $U_{max}$.

Die Güte des Ergebnisses einer Direktreduktion hängt unter anderem von den der Direktreduktion zugeführten oxidischen Eisenträgerpartikeln ab. Gegebenenfalls können an einem Rohmaterial durchgeführte Behandlungsschritte, deren Produkt als Einsatzmaterial der Direktreduktion zugeführt wird, die Güte des Ergebnisses beeinflussen.

Zusammenfassung der Erfindung

Technische Aufgabe

Es ist die Aufgabe der vorliegenden Erfindung, Verfahren und Vorrichtung zur Behandlung von Rohmaterial bereitzustellen, die zu Produkten führen, die bei Einsatz in einer Direktreduktion gegenüber dem Einsatz von Rohmaterial zu verbesserten Ergebnissen der Direktreduktion führen. Es sollen also Verfahren und Vorrichtung zur Bereitstellung eines Einsatzmaterials für Direktreduktion bereitgestellt werden. Weiters behandelt die Anmeldung die Verwendung des Einsatzmaterials für Direktreduktion.

Technische Lösung

Diese Aufgabe wird gelöst durch ein Verfahren zur Bereitstellung eines Einsatzmaterials für Direktreduktion, dadurch gekennzeichnet,

dass es umfasst, dass oxidisches Eisenträgerpartikel-Rohmaterial auf eine Temperatur von zumindest 400°C, bevorzugt auf eine Temperatur von zumindest 800°C, besonders bevorzugt auf eine Temperatur von zumindest 850°C, ganz besonders bevorzugt auf eine Temperatur von zumindest 900°C, erwärmt wird.

Das oxidische Eisenträgerpartikel-Rohmaterial kann Eisenerz - darunter sollen auch Erze verstanden werden, die sowohl Eisen als auch andere Metalle in Verbindungen mit beispielsweise Sauerstoff enthalten - sein oder auch anderes Eisenoxide enthaltendes Material, beispielsweise Gichtstaub, Sinterstaub, Pelletierstaub oder andere Rücklaufstoffe eines Eisen- beziehungsweise Stahlwerks; es können auch Mischungen daraus sein. Unter dem Begriff Eisenerz sind im Rahmen der vorliegenden Anmeldung zu verstehen sowohl Erze, die direkt nach der Förderung aus einer Mine dem Reduktionsprozess zugeführt werden, als auch Erze, die erst nach auf die Förderung folgenden Aufbereitungsschritten - beispielsweise Vorentwässerung oder Maßnahmen zur Steigerung des Eisengehaltes wie beispielsweise Flotation oder Magnetscheidung - oder anderen Vorbehandlungen dem Reduktionsprozess zugeführt werden. Jedenfalls ist in ihnen oxidiertes Eisen enthalten.

Das oxidische Eisenträgerpartikel-Rohmaterial wird erwärmt, es wird also einer Erwärmung unterzogen. Ziel ist es, dass das Einsatzmaterial eine Temperatur aufweist, die für die Zufuhr zur Direktreduktion gewünscht ist. Die bei dem Verfahren zur Bereitstellung zugeführte beziehungsweise entstehende Wärme soll bei der Direktreduktion nutzbar sein. Vorzugsweise wird das Einsatzmaterial der Direktreduktion mit der Temperatur zugeführt, die es bei Abschluss des Verfahrens zur Bereitstellung hat. Das erfindungsgemäß bereitgestellte Einsatzmaterial soll der Direktreduktion - vorzugsweise direkt - zugeführt werden. Eine Abkühlung des Einsatzmaterials, beispielsweise während einer Zwischenspeicherung nach der Herstellung des Einsatzmaterials vor einer Zufuhr zur Direktreduktion - was einer indirekten Zufuhr entspricht -, ist vorzugsweise zu vermeiden.

Es wird auf eine Temperatur von zumindest 400°C erwärmt. Bevorzugt wird auf eine Temperatur von zumindest 800°C, besonders bevorzugt auf eine Temperatur von zumindest 850°C, ganz besonders bevorzugt auf eine Temperatur von zumindest 900°C erwärmt. Vorzugsweise liegt die Obergrenze für die Erwärmung bei 1050°C, besonders bevorzugt bei 1000°C, um Sticking des erwärmten Materials gering zu halten beziehungsweise zu vermeiden. Die genannten Obergrenzen sind bei den Bereichsangaben mit umfasst.

Vorzugsweise erfolgt die Erwärmung zumindest mittels eines Heizgases oder mittels mehrerer Heizgase. Von Heizgas wird Wärme direkt oder indirekt auf das oxidische Eisenträgerpartikel-Rohmaterial übertragen. Es kann ein Heizgas oder auch mehrere verschiedene Heizgase eingesetzt werden. Als Heizgas kann beispielsweise das Rauchgas einer Verbrennung eingesetzt werden. Zusätzlich kann die Erwärmung auch mittels anderer Wärmequellen erfolgen, beispielsweise auf Basis von elektrischem Strom.

Vorzugsweise erfolgt die Erwärmung zumindest mittels eines Heißzyklons. Bevorzugt mittels mehrerer Heißzyklone, besonders bevorzugt mittels zumindest einer Kaskade mehrerer Heißzyklone; bei einer Kaskade wird bevorzugt Feststoff und Heizgas im Gegenstrom geführt, um die Effizienz der Wärmeübertragung zu optimieren. Zusätzlich kann die Erwärmung auch mittels anderer Heizvorrichtungen erfolgen, beispielsweise mittels eines - gegebenenfalls von außen, gegebenenfalls mittels eines Heizgases, beheizten - Drehrohres. Heißzyklone erlauben ein hohes Gas-Feststoff-Verhältnis und damit eine intensive und schnelle Wärmeeinbringung von Heizgas auf den zu heizenden Feststoff.

Vorzugsweise erfolgt Oxidation zumindest einer Teilmenge des oxidischen Eisenträgerpartikel-Rohmaterials. Obwohl das Einsatzmaterial einer Direktreduktion unterworfen werden soll, kann es vorteilhaft sein, vorher aufzuoxidieren. Wie sich zeigt, erfolgt die Direktreduktion gegebenenfalls ausgehend von höher oxidiertem Einsatzmaterial besser als bei Einsatz von dem höher oxidierten Einsatzmaterial zu Grunde liegenden oxidischen Eisenträgerpartikeln. Es kann das gesamte oxidische Eisenträgerpartikel-Material oder nur eine Teilmenge - beispielsweise bezüglich des Gewichts oder der Spezies, beispielsweise Spezies Magnetit - des oxidischen Eisenträgerpartikel-Rohmaterials oxidiert werden.

Erfolgt die Erwärmung in mehreren Heißzyklonen oder mehreren anderen Heizvorrichtungen, oder Kombinationen von Heißzyklonen und anderen Heizvorrichtungen - dabei kann es sich bei allen diesen Varianten beispielsweise um Abfolgen handeln - so ist das als ein Verfahrensschritt zu betrachten.

Vorzugsweise erfolgen Erwärmung und Oxidation zumindest teilweise gemeinsam in einem Verfahrensschritt. Beispielsweise kann in dem Verfahrensschritt, in dem Erwärmung und Oxidation zumindest teilweise erfolgen, ein Heizgas verwendet werden, das oxidierend wirkt, und somit sowohl zur Erwärmung als auch zur Oxidation beiträgt. Erwärmung und Oxidation erfolgen also gemeinsam in einem Verfahrensschritt, beziehungsweise sie erfolgen in demselben Verfahrensschritt. Das kann beispielsweise in einem Heißzyklon erfolgen. Gegebenenfalls erfolgt die Oxidation exotherm, so dass die Oxidation zur Erwärmung beiträgt. Die Verwendung eines Heißzyklons ist in so einem Fall besonders vorteilhaft, weil lokal entstehende Wärme einerseits schnell abgeführt und verteilt wird, und somit die Gefahr lokaler Überhitzung und eine damit verbundene Gefahr einer Agglomeration von Partikeln vermindert wird, und andererseits die entstehende Wärme zur Erwärmung der Gesamtmenge der Partikel beiträgt.

Vorzugsweise erfolgt die Oxidation in mehreren Verfahrensschritten. Dabei erfolgt nach einem ersten Oxidationsschritt in einem nachfolgenden Verfahrensschritt ein weiterer Oxidationsschritt. Beispielsweise kann in einem ersten Oxidationsschritt voroxidiert werden, und in einem nachfolgenden - direkt nachfolgend oder durch andere nicht oxidierende Verfahrensschritte vom ersten Oxidationsschritt getrennt - Oxidationsschritt höher oxidiert wird. Im letzten von mehreren Oxidationsschritten soll so hoch oxidiert werden, wie es für das Einsatzmaterial für die Zufuhr zur Direktreduktion gewünscht ist.

In jedem Verfahrensschritt, in dem Oxidation erfolgt, kann auch Erwärmung stattfinden.

Vorzugsweise werden zur Oxidation zumindest zwei verschiedene Arten von Oxidationsschritten eingesetzt. Beispielsweise kann für den ersten Oxidationsschritt ein Heißzyklon - beziehungsweise eine Heißzyklonkaskade - mit oxidierendem Heizgas, und für einen zweiten Oxidationsschritt ein Wirbelschichtreaktor mit oxidierendem Gas betrieben oder ein mit oxidierendem Gas versorgter Drehrohrofen.

Das kann vorteilhaft sein, wenn die Charakteristika einer Art von Oxidationsschritt für eine Voroxidation geeignet sind, sie aber bezüglich höherer Oxidation Nachteile aufweist. Beispielsweise hat eine Voroxidation von Magnetit zu Hämatit in einem Heißzyklon den Vorteil, dass sie gemeinsam mit der Erwärmung stattfinden kann, jedoch auch den Nachteil, dass die bei Heißzyklonen realisierbare Verweilzeit aufgrund abnehmender Oxidationsgeschwindigkeit mit zunehmender Oxidation das wirtschaftlich sinnvoll erzielbare Ausmaß der Oxidation begrenzt. Durch Durchführung eines zweiten Oxidationsschrittes mit einer anderen Art von Oxidationsschritt wie vorab angeführt kann diese Begrenzung überwunden werden; beispielsweise indem eine Art gewählt wird, bei der eine längere Verweilzeit als im Heißzyklon realisiert werden kann - dazu kommen beispielsweise Oxidation in einem Drehrohr oder in einer Wirbelschicht in Frage.

Vorzugsweise erfolgt die Oxidation, bis zumindest 85 %, bevorzugt zumindest 90 %, besonders bevorzugt zumindest 95 % des Eisens Fe mit der Oxidationszahl +3 vorliegen. Das bedeutet, dass Eisen aus dem oxidischen Eisenträgerpartikel-Rohmaterial zu zumindest 85 %, bevorzugt zumindest 90 %, besonders bevorzugt zumindest 95 % als Fe mit Oxidationszahl +3 vorliegen soll; das Einsatzmaterial soll also zumindest 85 %, bevorzugt zumindest 90 %, besonders bevorzugt zumindest 95 % seines Eisengehaltes als Fe (III) enthalten im Eisenoxid.

Beispielsweise wird ein überwiegend magnetitisches Eisen enthaltendes oxidisches Eisenträgerpartikel-Rohmaterial in ein zumindest 85 % Fe-(III)-oxid enthaltendes Einsatzmaterial umgewandelt durch Anwendung des erfindungsgemäßen Verfahrens.

Bevorzugt weist das oxidische Eisenträgerpartikel-Rohmaterial zu zumindest 90 Massen% eine Korngröße kleiner/gleich 200 Mikrometer auf. Dann eignet sich das erfindungsgemäß bereitgestellte Einsatzmaterial zur Durchführung des voranstehend beschriebene Verfahrens zur Direktreduktion von oxidischen Eisenträgerpartikeln in einem im Kreuzstrom durchströmten Fließbett.

Bevorzugt weist das Einsatzmaterial zu zumindest 90 Massen% eine Korngröße kleiner/gleich 200 Mikrometer auf. Dann eignet sich das Einsatzmaterial zur Durchführung des voranstehend beschriebene Verfahrens zur Direktreduktion von oxidischen Eisenträgerpartikeln in einem im Kreuzstrom durchströmten Fließbett.

Ein weiterer Gegenstand der Erfindung ist die Verwendung eines erfindungsgemäß hergestellten Einsatzmaterials in einem Verfahren zur Direktreduktion von oxidischen Eisenträgerpartikeln, bevorzugt in dem voranstehend beschriebenen Verfahren zur Direktreduktion von oxidischen Eisenträgerpartikeln in einem im Kreuzstrom durchströmten Fließbett. Das Einsatzmaterial enthält oxidische Eisenträgerpartikel. Die oxidischen Eisenträgerpartikel werden bei der Direktreduktion zumindest teilweise reduziert.

Die dem Material bei dem Verfahren zur Bereitstellung zugeführte beziehungsweise entstehende Wärme soll bei der Direktreduktion nutzbar sein. Vorzugsweise wird das Einsatzmaterial der Direktreduktion mit der Temperatur zugeführt, die es bei Abschluss des Verfahrens zur Bereitstellung hat.

Es wird in der vorliegenden Anmeldung ein Verfahren zur Direktreduktion vorgestellt, das - gegebenenfalls neben anderen zusätzlichen Schritten - die folgenden Schritte umfasst:

- Durchführung eines erfindungsgemäßen Verfahrens zur Bereitstellung eines Einsatzmaterials für Direktreduktion, und

- Anwendung eines Verfahrens zur Direktreduktion von oxidischen Eisenträgerpartikeln, bevorzugt des voranstehend beschriebenen Verfahrens zur Direktreduktion von oxidischen Eisenträgerpartikeln in einem im Kreuzstrom durchströmten Fließbett, auf das Einsatzmaterial.

Ein weiterer Gegenstand der Erfindung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

Ein weiterer Gegenstand der Erfindung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der Erfindung ist ein Speichermedium mit einem darauf gespeicherten erfindungsgemäßen maschinenlesbaren Programmcode.

Ein weiterer Gegenstand der Erfindung ist eine Vorrichtung zur Durchführung eines erfindungsgemäßen Verfahrens, dadurch gekennzeichnet, dass sie zumindest eine Vorrichtung zur Erwärmung von oxidischen Eisenträgerpartikeln umfasst.

In diese Vorrichtung zur Erwärmung von oxidischem Eisenträgerpartikeln mündet selbstverständlich zumindest eine Zugabeleitung zur Zugabe von oxidischem Eisenträgerpartikeln. Von dieser Vorrichtung zur Erwärmung von oxidischem Eisenträgerpartikeln geht selbstverständlich auch zumindest eine Ausleitung zur Ausleitung von erwärmten oxidischen Eisenträgerpartikeln aus.

Die oxidischen Eisenträgerpartikel sind beispielsweise das Rohmaterial, das zur Bereitstellung von Einsatzmaterial für Direktreduktion mit dem erfindungsgemäßen Verfahren dient.

Vorzugsweise mündet zumindest eine Heizgaszufuhrleitung in die Vorrichtung zur Erwärmung von oxidischen Eisenträgerpartikeln. Dort kann das mittels der Heizgaszufuhrleitung zugeführte Heizgas zur direkten oder indirekten Erwärmung eingesetzt werden.

Vorzugsweise umfasst die Vorrichtung zur Erwärmung von oxidischen Eisenträgerpartikeln zumindest einen Heißzyklon. Bevorzugt umfasst sie eine Kaskade von Heißzyklonen.

Vorzugsweise umfasst die Vorrichtung zur Durchführung eines erfindungsgemäßen Verfahrens zumindest eine, bevorzugt zumindest zwei, Vorrichtungen zur Oxidation oxidischer Eisenträgerpartikel. Vorzugsweise umfasst sie zumindest zwei Vorrichtungen zur Oxidation oxidischer Eisenträgerpartikel, die zur Durchführung jeweils verschiedener Arten von Oxidationsschritten geeignet sind. Beispielsweise soll eine erste Vorrichtung zur Durchführung einer ersten Art von Oxidationsschritt geeignet sein, und eine zweite Vorrichtung zur Durchführung einer zweiten Art von Oxidationsschritt - die von der ersten Art von Oxidationsschritt verschieden ist - geeignet sein. Das ist beispielsweise gegeben, wenn ein Heißzyklon oder eine Heißzyklonkaskade als Oxidationsart zwecks Voroxidation eingesetzt wird, und eine Wirbelschichtoxidation als Oxidationsart für höhere Oxidation - bevorzugt bis zur Erreichung des für das Einsatzmaterial bei Verwendung zur Direktreduktion vorgesehenen Ausmaßes der Oxidation - eingesetzt wird.

Vorzugsweise ist zumindest eine Vorrichtung zur Erwärmung von oxidischen Eisenträgerpartikeln auch eine Vorrichtung zur Oxidation von oxidischen Eisenträgerpartikeln. Beispielsweise kann in einem Heißzyklon beziehungsweise in einer Heißzyklonkaskade bei entsprechender Wahl des Heizgases erwärmt und oxidiert werden.

Vorzugsweise geht von der Vorrichtung zur Durchführung eines erfindungsgemäßen Verfahrens eine Zuspeisleitung zur Zuspeisung von Einsatzmaterial in eine Direktreduktionsvorrichtung aus. Vorzugsweise handelt es sich dabei um eine Vorrichtung zur Durchführung des voranstehend beschriebenen Verfahrens zur Direktreduktion von oxidischen Eisenträgerpartikeln, beispielsweise wie voranstehend beschrieben.

Kurze Beschreibung der Zeichnungen

Nachfolgend wird die vorliegende Erfindung anhand mehrerer schematischer Figuren beispielhaft beschrieben.

Figur 1 zeigt die Durchführung des voranstehend beschriebenen Verfahrens zur Direktreduktion von oxidischen Eisenträgerpartikeln in einem im Kreuzstrom durchströmten Fließbett im Schnitt durch einen schematischen Reaktorraum.

Figur 2 zeigt schematisch eine Anordnung mit mehreren Teilreaktoren für das voranstehend beschriebene Verfahren zur Direktreduktion von oxidischen Eisenträgerpartikeln in einem im Kreuzstrom durchströmten Fließbett.

Figur 3 zeigt für das voranstehend beschriebene Verfahrens zur Direktreduktion von oxidischen Eisenträgerpartikeln in einem im Kreuzstrom durchströmten Fließbetteinen Zusammenhang zwischen Leerrohrgeschwindigkeit U und Partikelgröße d.

Figur 4 zeigt für schematisch die Durchführung des erfindungsgemäßen Verfahrens zur Bereitstellung von Einsatzmaterial für Direktreduktion.

Beschreibung der Ausführungsformen

Beispiele

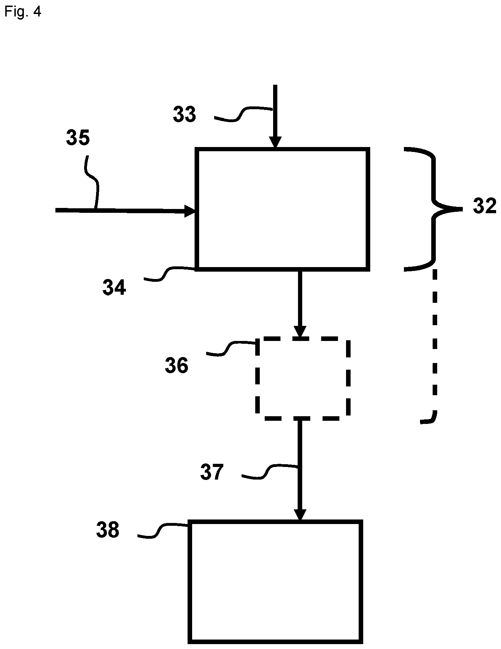

Figur 4 zeigt schematisch eine Ausführungsform einer Vorrichtung zur Durchführung eines erfindungsgemäßen Verfahrens 32. Über eine Zugabeleitung 33 werden oxidische Eisenträgerpartikel, die als Rohmaterial für die Bereitstellung von Einsatzmaterial für eine Direktreduktion dienen, einer Vorrichtung zur Erwärmung von oxidischen Eisenträgerpartikeln 34 zugegeben; diese ist schematisch als Rechteck dargestellt und kann beispielsweise eine Kaskade von Heißzyklonen umfassen. Eine Heizgaszufuhrleitung 35 mündet in die Vorrichtung zur Erwärmung von oxidischen Eisenträgerpartikeln 34. Auf die Darstellung von selbstverständlich auch vorhandenen Leitungen zur Ausleitung von anfallendem Abgas wird zur besseren Übersichtlichkeit verzichtet. Das mittels der Heizgaszufuhrleitung 35 zugeführte Heizgas wird zur Erwärmung auf eine Temperatur von zumindest 400°C eingesetzt. Die Vorrichtung zur Erwärmung von oxidischen Eisenträgerpartikeln 34 ist im dargestellten Fall auch eine Vorrichtung zur Oxidation oxidischer Eisenträgerpartikel, da das Heizgas zur direkten Erwärmung eingesetzt wird und dabei auf die oxidischen Eisenträgerpartikel oxidierend wirkt. Optional ist eine weitere Vorrichtung zur Oxidation oxidischer Eisenträgerpartikel 36 vorhanden, die strichliert dargestellt ist; es kann sich beispielsweise um eine Wirbelschicht oder ein Drehrohr handeln, in denen oxidierende Bedingungen herrschen. Material wird aus der Vorrichtung zur Erwärmung von oxidischen Eisenträgerpartikeln 34 in die weitere Vorrichtung zur Oxidation oxidischer Eisenträgerpartikel 36 eingeleitet. Auf die Darstellung von selbstverständlich auch vorhandenen Leitungen zur Zufuhr von oxidierend wirkenden Mitteln beziehungsweise zur Ausleitung von anfallendem Abgas wird zur besseren Übersichtlichkeit verzichtet. Über eine Zuspeisleitung 37 wird das Einsatzmaterial direkt einer Direktreduktionsvorrichtung 38 zugeführt; dabei wird eine Abkühlung des Einsatzmaterials vermieden. Die Direktreduktionsvorrichtung 38 kann beispielsweise wie in den Figuren 1 und 2 dargestellt ausgeführt sein. In der Direktreduktionsvorrichtung 38 wird das Einsatzmaterial verwendet, um Eisenschwamm herzustellen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination in einem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die beschriebenen Eigenschaften, Merkmale und Vorteile der Erfindung sowie die Art und Weise, wie diese erreicht werden, werden klarer und deutlicher verständlich im Zusammenhang mit der Beschreibung des bzw. der Ausführungsbeispiele der Erfindung, die im Zusammenhang mit den Zeichnungen näher erläutert werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung zu verlassen.

Liste der Bezugszeichen

1                         Vorrichtung zur Durchführung eines Verfahrens zur Direktreduktion von oxidischen Eisenträgerp-

| | |
|---|---|
| | artikeln in einem im Kreuzstrom durchströmten Fließbett |
| 2 | oxidische Eisenträgerpartikel |
| 3 | Eingabeöffnung |
| 4 | Fließbett |
| 5 | Reaktorraum |
| 6 | Fließbettreaktor |
| 7 | Verteilerboden |
| 8 | Reduktionsgas |
| 9 | Reduktionsprodukt |
| 10 | verbrauchtes Reduktionsgas |
| 11 | Reduktionsgaszufuhrleitung |
| 12 | Reduktionsgasabfuhrleitung |
| 13 | Fließbettreaktor |
| 14 | Teilreaktor |
| 15 | Ende |
| 16 | Teilreaktor |
| 17 | Ende |
| 18 | Teilreaktor |
| 19 | Ende |
| 20 | Teilreaktor |
| 21a,21b,21c | Übergabevorrichtungen |
| 22 | Eisenträger-Partikel |
| 23 | Anfang |
| 24 | Reaktionsprodukt |
| 25 | Ende |
| 26a,26b,26c,26d | Reduktionsgaszufuhrleitungen |
| 27 | Zentralleitung |
| 28a,28b,28c,28d | Reduktionsgasabfuhrleitungen |
| 29 | Abfuhrsammelleitung |
| 30 | Gasaufbereitungsanlage |
| 31 | Rezirkulierungsleitung |
| 32 | Vorrichtung zur Durchführung eines erfindungsgemäßen Verfahrens |
| 33 | Zugabeleitung |
| 34 | Vorrichtung zur Erwärmung von oxidischen Eisenträgerpartikeln |
| 35 | Heizgaszufuhrleitung |
| 36 | weitere Vorrichtung zur Oxidation oxidischer Eisenträgerpartikel |
| 37 | Zuspeisleitung |
| 38 | Direktreduktionsvorrichtung |

**Patentansprüche**

1. Verfahren zur Bereitstellung eines Einsatzmaterials für Direktreduktion,
   **dadurch gekennzeichnet,**
   **dass** es umfasst, dass oxidisches Eisenträgerpartikel-Rohmaterial auf eine Temperatur von zumindest 400°C, bevorzugt auf eine Temperatur von zumindest 800°C, besonders bevorzugt auf eine Temperatur von zumindest 850°C, ganz besonders bevorzugt auf eine Temperatur von zumindest 900°C, erwärmt wird.

2. Verfahren nach Anspruch 1, **dadurch gekennzeichnet, dass** die Erwärmung zumindest mittels eines Heizgases oder mittels mehrerer Heizgase erfolgt.

3. Verfahren nach Anspruch 1 oder 2, **dadurch gekennzeichnet, dass** die Erwärmung zumindest mittels eines Heißzyklons erfolgt.

4. Verfahren nach einem der Ansprüche 1 bis 3, **dadurch gekennzeichnet, dass** Oxidation zumindest einer Teilmenge des oxidischen Eisenträgerpartikel-Rohmaterials erfolgt.

5. Verfahren nach Anspruch 4, **dadurch gekennzeichnet, dass** Erwärmung und Oxidation zumindest teilweise gemeinsam in einem Verfahrensschritt erfolgen.

6. Verfahren nach einem der Ansprüche 4 bis 5, **dadurch gekennzeichnet, dass** die Oxidation in mehreren Verfahrensschritten erfolgt.

7. Verfahren nach einem der Ansprüche 4 bis 6, **dadurch gekennzeichnet, dass** zur Oxidation zumindest zwei verschiedene Arten von Oxidationsschritten eingesetzt werden.

8. Verfahren nach einem der Ansprüche 4 bis 7, **dadurch gekennzeichnet, dass** die Oxidation erfolgt, bis zumindest 85 %, bevorzugt zumindest 90 %, besonders bevorzugt zumindest 95 % des Eisens Fe mit der Oxidationszahl +3 vorliegen.

9. Verfahren nach einem der Ansprüche 1 bis 8, **dadurch gekennzeichnet, dass** das oxidische Eisenträgerpartikel-Rohmaterial zu zumindest 90 Massen% eine Korngröße kleiner/gleich 200 Mikrometer aufweist.

10. Verfahren nach einem der Ansprüche 1 bis 9, **dadurch gekennzeichnet, dass** das Einsatzmaterial zu zumindest 90 Massen% eine Korngröße kleiner/gleich 200 Mikrometer aufweist.

11. Verwendung eines nach einem der Ansprüche 1 bis 10 bereitgestellten Einsatzmaterials in einem Verfahren zur Direktreduktion von oxidischen Eisenträgerpartikeln, bevorzugt in einem Verfahren zur Direktreduktion von oxidischen Eisenträgerpartikeln in einem im Kreuzstrom durchströmten Fließbett.

12. Vorrichtung zur Durchführung eines Verfahrens nach einem der Ansprüche 1 bis 10, **dadurch gekennzeichnet, dass** sie zumindest eine Vorrichtung zur Erwärmung von oxidischen Eisenträgerpartikeln umfasst.

13. Vorrichtung nach Anspruch 12, **dadurch gekennzeichnet, dass** zumindest eine Heizgaszufuhrleitung in die Vorrichtung zur Erwärmung von oxidischen Eisenträgerpartikeln mündet.

14. Vorrichtung nach Anspruch 12 oder Anspruch 13, **dadurch gekennzeichnet, dass** die Vorrichtung zur Erwärmung von oxidischen Eisenträgerpartikeln zumindest einen Heißzyklon umfasst.

15. Vorrichtung nach einem der Ansprüche 12 bis 14, **dadurch gekennzeichnet, dass** sie zumindest eine, bevorzugt zumindest zwei, Vorrichtungen zur Oxidation oxidischer Eisenträgerpartikel umfasst.

16. Vorrichtung nach Anspruch 15, **dadurch gekennzeichnet, dass** sie zumindest zwei Vorrichtungen zur Oxidation oxidischer Eisenträgerpartikel umfasst, die zur Durchführung jeweils verschiedener Arten von Oxidationsschritten geeignet sind.

17. Vorrichtung nach einem der Ansprüche 15 bis 16, **dadurch gekennzeichnet, dass** zumindest eine Vorrichtung zur Erwärmung von oxidischen Eisenträgerpartikeln auch eine Vorrichtung zur Oxidation von oxidischen Eisenträgerpartikeln ist.

18. Vorrichtung nach einem der Ansprüche 12 bis 17, **dadurch gekennzeichnet, dass** von ihr eine Zuspeisleitung zur Zuspeisung von Einsatzmaterial in eine Direktreduktionsvorrichtung ausgeht.

Fig. 1

Fig. 2

Fig. 3

Fig. 4

**Europäisches Patentamt**
**European Patent Office**
**Office européen des brevets**

## EUROPÄISCHER RECHERCHENBERICHT

Nummer der Anmeldung

EP 20 21 5920

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/361395 A1 (HAN YUEXIN [CN] ET AL) 20. Dezember 2018 (2018-12-20) * Abbildung 1 * * Absatz [0001] * * Absatz [0005] - Absatz [0018] * * Ansprüche 1-6 * ----- | 1-18 | INV. C21B13/00 C21B13/14 F27B15/00 F27B15/10 F27D7/02 |
| X | Ranzani Da Costa Andrea ET AL: "La réduction du minerai de fer par l'hydrogène : étude cinétique, phénomène de collage et modélisation", , 27. Juni 2011 (2011-06-27), XP55797837, Gefunden im Internet: URL:https://tel.archives-ouvertes.fr/tel-0 1204934/file/These_Ranzani_2011.pdf [gefunden am 2021-04-21] * Seite 13 - Seite 50 * * Seite 53 - Seite 102 * * Seite 175 - Seite 209 * * Seite 209 - Seite 214 * ----- | 1-18 | |
| X | SEFIDARI HAMID ET AL: "The effect of disintegrated iron-ore pellet dust on deposit formation in a pilot-scale pulverized coal combustion furnace. Part I: Characterization of process gas particles and deposits", FUEL PROCESSING TECHNOLOGY, ELSEVIER BV, NL, Bd. 177, 11. Mai 2018 (2018-05-11), Seiten 283-298, XP085404837, ISSN: 0378-3820, DOI: 10.1016/J.FUPROC.2018.05.004 * Seite 1 - Seite 2 * ----- | 1-18 | RECHERCHIERTE SACHGEBIETE (IPC) C21B C21C F27B F27D |

Der vorliegende Recherchenbericht wurde für alle Patentansprüche erstellt

| Recherchenort | Abschlußdatum der Recherche | Prüfer |
|---|---|---|
| Den Haag | 22. April 2021 | Jung, Régis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 5920

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2021

| Im Recherchenbericht angeführtes Patentdokument | Datum der Veröffentlichung | Mitglied(er) der Patentfamilie | Datum der Veröffentlichung |
|---|---|---|---|
| US 2018361395 A1 | 20-12-2018 | CN 106868292 A<br>US 2018361395 A1 | 20-06-2017<br>20-12-2018 |

Für nähere Einzelheiten zu diesem Anhang : siehe Amtsblatt des Europäischen Patentamts, Nr.12/82

EPO FORM P0461